# EUROPÄISCHE PATENTSCHRIFT

(11) **EP 1 974 973 B1**
(45) Veröffentlichungstag und Bekanntmachung des Hinweises auf die Patenterteilung: **28.04.2010**
(21) Anmeldenummer: 07405149.1
(22) Anmeldetag: 22.05.2007
(51) Int. Cl.: B60K 11/08, F01P 7/06

(54) **Jalousie für Kraftfahrzeuge**
Blind for motor vehicles
Store pour véhicules automobiles

(30) Priorität: 30.03.2007 CH 5262007; 30.03.2007 CH 5272007
(43) Veröffentlichungstag der Anmeldung: 01.10.2008
(73) Patentinhaber: Kunststoff Schwanden AG, CH-8762 Schwanden/GL (CH)
(72) Erfinder: Kiener, Albert, 8753 Mollis (CH); Küsperth, Josef, 8762 Schwanden (CH)
(74) Vertreter: Quehl, Horst Max

(56) Entgegenhaltungen:
- DE-A1- 3 905 349
- DE-A1- 4 414 893
- DE-A1- 10 047 952
- DE-A1-102005 021 676
- GB-A- 913 147

## Beschreibung

Die Erfindung betrifft eine Jalousie für die Steuerung des Luftstromes durch den Motorkühler eines Kraftfahrzeuges, mit ringförmig nebeneinander angeordneten, sich in Schliessposition teilweise überdeckenden, einerseits in einem äusseren, für die Verbindung mit dem Kühler bestimmten Gehäusering und anderseits in einem inneren Stützring schwenkbar gelagerten Lamellen sowie mit einem Eingriffsmittel für den Schwenkantrieb von Lamellen aufweisenden, mit dem Gehäusering gleich umlaufenden Stellring.

Eine Jalousie dieser Art ist beispielsweise bekannt durch die DE-3905349 und die DE-10047952. Eine solche Jalousie bewirkt in geschlossenem Zustand, dass der Motor des Fahrzeuges sich nach Start schneller erwärmt und damit einen Betriebszustand mit besserem Wirkungsgrades und geringerem Verschleiss schneller erreicht. Ausserdem wird durch die geschlossene Jalousie das vom Motorraum in die Umgebung des Fahrzeuges gelangende Motorgeräusch verringert und es ergibt sich dabei eine Verbesserung des cw-Wertes des Fahrzeuges, indem die durch die Fahrgeschwindigkeit sich ergebende Anströmung gegen den frontseitigen Fahrzeugkühler nicht mit entsprechendem Strömungswiderstand durch diesen und einen Teil des Motorraumes hindurch weiter strömt. Der Schwenkantrieb der Lamellen dieser Kühlerjalousien erfolgt jeweils über einen von ihrem Lagerzapfen radial, innerhalb des durchströmten Kanals wegragenden Schwenkhebel mit einem endseitigen Schwenkzapfen, der in einen umlaufenden, gemeinsamen Stellring eingreift. Da folglich die Stellbewegung der Schwenkzapfen der Lamellen entlang eines Kreisbogens verläuft, bewirkt die Kopplung mit dem Stellring, dass dieser entweder eine Hubbewegung ausführt oder er benötigt für die Schwenkzapfen jeweils eine zum Strömungskanal hin offene, axial gerichtete Schlitzaufnahme. Beide Varianten haben den Nachteil, dass die Abdichtung gegenüber aus der Kühlluft eindringende und sich in Hohlräume der Verstellmechanik festsetzende Schmutzpartikel nicht gewährleistet ist. Ausserdem benötigt der Schwenkhebel für das Schwenken der Lamellen um 90° einen relativ langen Stellweg seines Schwenkzapfens bzw. des Stellringes, mit dabei nachteiliger Verringerung der wirksamen Hebellänge.

Die schrift DE 4 414 893 offenbart eine Jalousie nach dem Oberbegriff des Anspruchs 1.

Der Erfindung liegt die Aufgabe zugrunde, eine Jalousie der eingangs genannten Art derart zu verbessern, dass sie bei geringem Gewicht und hoher Formsteifigkeit eine verbesserte Abdichtung einerseits gegen nach aussen dringende Motorgeräusche gewährleistet und andererseits auch das Eindringen von Schmutz zu den Lamellenlagerungen und ihr Antriebssystem sicher verhindert, so dass sich eine zuverlässigere und dauerhaftere Funktionstüchtigkeit ergibt. Ausserdem soll eine solche Jalousie aufgrund ihrer Gestaltung auf einfachere und damit kostengünstigere Weise herstellbar sein.

Die Lösung dieser Aufgabe an einer Jalousie der eingangs genannten Art erfolgt erfindungsgemäss aufgrund der kennzeichnenden Merkmale des Patentanspruchs 1.

Vorteilhafte Ausgestaltungen der Erfindung und ihre besonderen Vorteile sind der folgenden Beschreibung von Ausführungsbeispielen anhand der Zeichnungen zu entnehmen. Es zeigt jeweils in perspektivischer Darstellung:
Fig.1 eine erfindungsgemässe Jalousie in einer Baugruppe mit einer Kühlerzarge und dem Schaufelrad eines Kühlgebläses,
Fig.2 eine Darstellung eines sektorförmig ausgeschnittenen Bereiches der Jalousie nach Fig.1,
Fig.3 eine vergrösserte Teildarstellung von Fig.2,
Fig.4 eine Jalousie der Anordnung nach Fig.1,
Fig.5 eine selbsttätig im Luftstrom schwenkbare, asymmetrische Lamelle der Jalousie nach Fig.4,
Fig.6 den Zahneingriff eines Umfangsbereiches eines Stellringes mit dem gezahnten Steuerkopf zweier Lamellen der Jalousie nach Fig.2 bis 4 und
Fig.7 zwei in Dichtposition aneinander anliegende Lamellen der Jalousie nach Fig.2 bis 4.

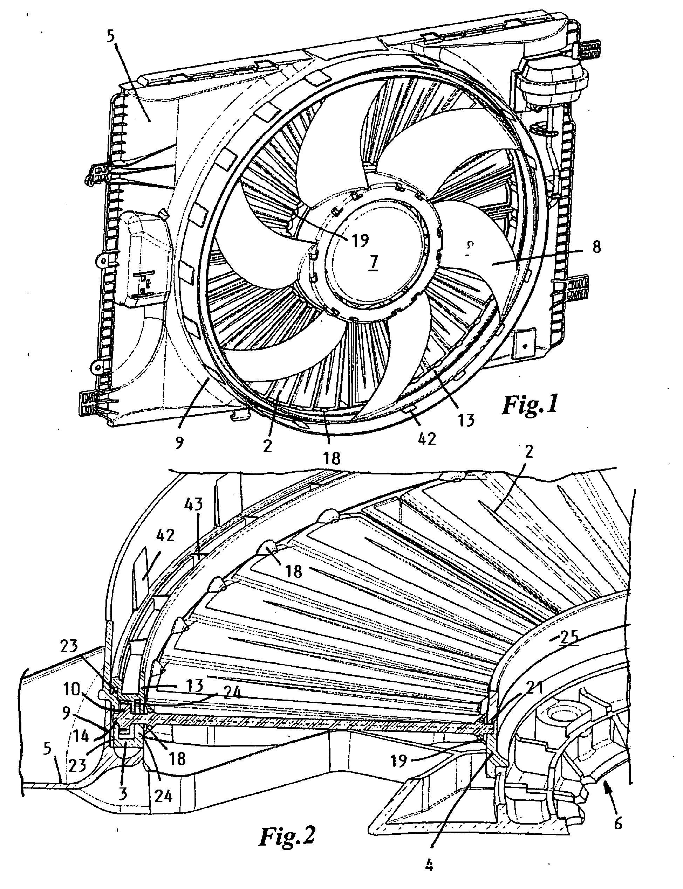

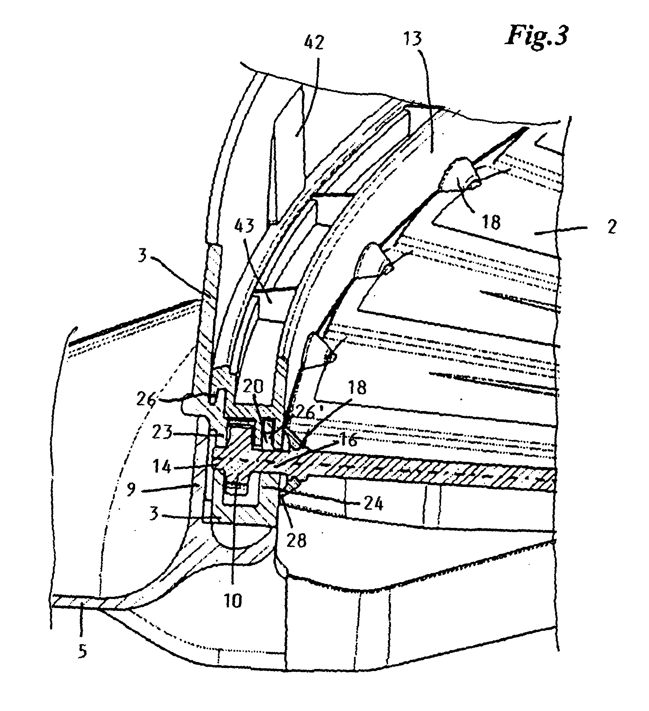

Die Jalousie 1 hat zahlreiche ringförmig nebeneinander angeordnete und radial gerichtete Lamellen 2, 22. Diese sind im Bereich ihres äussseren Endes in einem äusseren Gehäusering 3 und an ihrem inneren Ende in einem inneren Stützring 4 ortsfest um eine beide Lagerstellen miteinander verbindende geometrische Achse schwenkbar gelagert. Dabei kann der äussere Gehäusering 3 einstückig Bestandteil einer Kühlerzarge 5 sein, die mit ihrem zentralen Bereich 6 der Aufnahme des Elektromotors 7 eines Kühlgebläses 8 dient oder er hat entsprechend der Darstellung in Fig.2 und 3 einen Passsitz in einem rohrstutzenförmigen Ansatz 9 der Kühlerzarge 5, so dass diese jeweils einen Adapter zur Anpassung an bestimmte Kühlerdimensionen bildet.

Zur zwangsgesteuerten Bewegung der Lamellen 2 von einer dicht geschlossenen, den Fahrtwiderstand eines Fahrzeuges verringernden Position zu einer vollständig geöffneten Position haben diese an ihrem radial äusseren Ende einen vorzugsweise einstückig angeformten Steuerkopf 10 mit einem kreisbogenförmig entsprechend der Form eines Zahnrades entweder vollständig oder kreissektorförmig unvollständig umlaufenden, gezahnten Eingriffsbereich 12. Dieser befindet sich in kämmendem Eingriff mit einem gezahnten Umfangsbereich 11 eines an dem äusseren Gehäuseringes 3 verdrehbar geführten Stellringes 13.

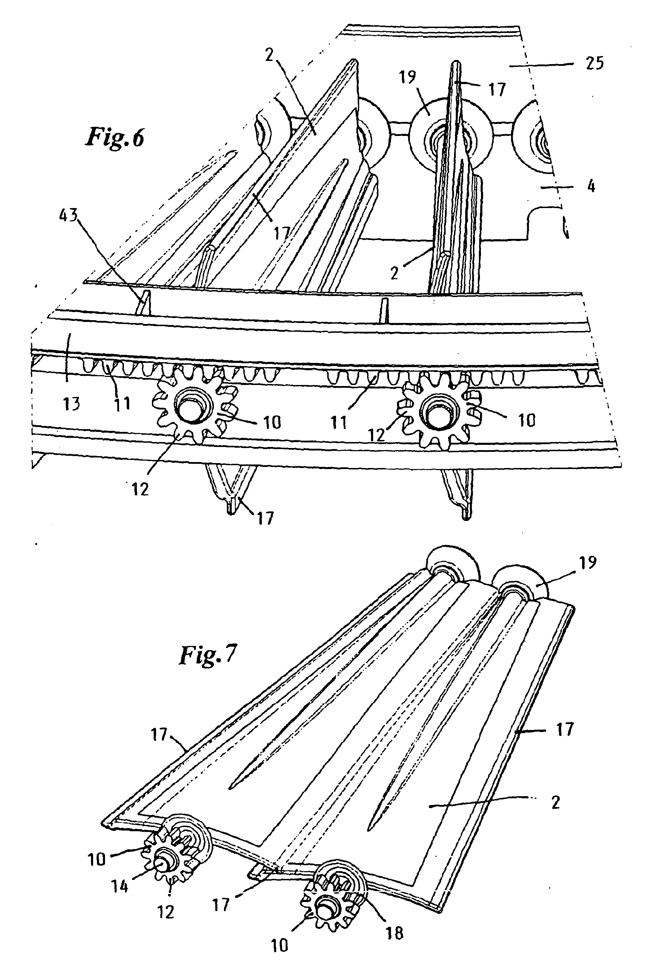

Für seine Verschiebung bzw. Stellverdrehung und damit Schwenken der steuerbaren Lammellen 2 in Abhängigkeit vom Signal eines z.B. im Kühlwasserstrom des Motorkühlers angeordneten Messfühlers, ist auf nicht dargestellte Weise zwischen einer Umfangsstelle des Stellringes 13 und der Kühlerzarge 5 ein elektrisch, pneumatisch oder hydraulisch wirkender Stellantrieb vorgesehen. Aufgrund der Erfindung benötigt dieser zum Schwenken der Lamellen 2 von vollständig geöffneter Position entsprechend der Darstellung in Fig.6 bis zur geschlossenen Position entsprechend den Darstellungen in Fig. 2 oder 7, d.h. um ca. 90°, nur einen kurzen, im Wesentlichen geraden Stellweg entsprechend einer Verdrehung des Stellringes 13 z.B. um nur ca. 3°.

Die Herstellung der Lamellen 2, 22 mit ihren für die drehbare Lagerung vorgesehenen Lagerzapfen 14,15, einem Achsstück 16, ihrem Steuerkopfes 10 und einem weichelastischen Lamellenrand 17 und einer an diesen einstückig angrenzenden Dichtmanschetten 18,19 erfolgt vorteilhaft ohne zwischenzeitliches Entformen in montagegerechter gegenseitiger Zuordnung in einer gemeinsamen Spritzgiessform.

Bei der anschliessende Montage werden die Lamellen 2, 22 in im Wesentlichen u-förmige Lagerausnehmungen 20,21 des äusseren Gehäusering 3 und des inneren Stützringes 4 eingesetzt. Dabei rastet der äussere Lagerzapfen 14 der Lamellen 2 jeweils in eine Lageröffnung 40 ein, die im äusseren von zwei Querschnittsschenkeln 23,24 eines u-förmigen Querschnitts des Gehäuseringes 3 vorgesehen ist. Ein weiterer Rasteingriff kann auch mittels des Achsstückes 16 und des inneren Lagerzapfens 15 in die u-förmigen Lagerausnehmungen 20,21 hinein erfolgen, indem diese aussen geringfügig verengt sind.

Für die Sicherung der inneren Lagerzapfen 15 in einer Lagerausnehmung 21 ist der innere Stützring 4 zweiteilig ausgeführt und hat somit zusätzlich einen Schliessring 25. Eine zusätzliche Sicherung des Achsstückes 16 in der Lagerausnehmung 20 des äusseren Gehäuseringes 3 erfolgt entsprechend der Darstellung in Fig.2 und 3 durch den am Gehäusering 3 anliegenden Stellring 13.

Der Steuerkopf 10 der Lamellen 2 ist somit zwischen den beiden Querschnittsschenkeln 23,24 des Gehäuseringes 3 eingeschlossen. Der Verschluss nach aussen ergibt sich durch den auf dem Gehäusering 3 gleitenden Stellring 13. Dieser ist nach aussen durch in gleichmässigen Abständen an der Innenseite des Gehäuseringes 3 vorgesehene Rastnasen 42 in seiner axialen Position verdrehbar gehalten. Er hat einen nach aussen offenen, im Querschnitt u-förmigen Hohlquerschnitt und ist durch in gleichmässigen Abständen vorgesehene Stege 43 formstabil verstärkt.

Für ein zusätzliche Abdichtung gegen eindringende Verschmutzungen nach Art eines Dichtlabyrinths umgreift der Stellring 13 jeweils mittels im Querschnitt u-förmigen Aussparungen 26, 26' die Querschnittsschenkel 23,24 des Gehäuseringes 3. Es versteht sich, dass in umgekehrter, nicht dargestellter Anordnung Querschnittsschenkel des Stellringes 13 in entsprechende Aussparungen des Gehäuseringes 3 eingreifen können.

Vorzugsweise ist zusätzlich zu den mittels eines Stellantriebes in ihrer Stellposition veränderbaren Lamellen 2 mindestens eine Lamelle 22 vorgesehen, die frei schwenkbar ist und entweder in unsymmetrischer Ausführung durch ihr Eigengewicht oder durch Verbindung mit einem Fremdgewicht selbsttätig in Schliessposition gehalten ist, so dass sie erst beim Fahren durch den Staudruck einer Fahrtluftströmung selbsttätig in einer geöffneten Position geschwenkt gehalten wird. Auf diese Weise wird eine meistens ausreichende, wesentlich eingeschränkte Durchströmung des Motorkühlers und eine entsprechende, mit einer Geräuschdämmung verbundene Verbesserung des cw-Wertes des Fahrzeuges erreicht.

Für eine verbesserte Abdichtwirkung der Jalousie 1 erstreckt sich zumindest entlang der in Schliessposition auf einer benachbarten Lamelle 2 aufliegende Lamellenkante ein weichelastischer Lamellenrand 17, der im Spritzgiessverfahren einstückig an die aus steiferem Material bestehende Lamelle 2,22 angeformt ist. Vorzugsweise geht dieser weichelastische Lamellenrand 27 im Bereich der Lamellenenden einstückig einerseits in eine an dem äusseren Gehäusering 3 und dem Stellring 13 und andererseits an dem inneren Stützring 4 dichtend anliegende, kappenförmig eine Dichtlippe 28 bildende Dichtmanschette 18,19 über. Diese bewirkt eine zuverlässige Abdichtung der zum Verstellen der Lamellen 2 erforderlichen Bauelemente, d.h. der Lamellenlagerung und der Verstellmechanik einschliesslich des Stellringes 8 gegenüber Staub und Feuchtigkeit, so dass deren dauerhafte Funktion sichergestellt ist. Ausserdem bilden die an die Lamellen 2 angeformten Dichtmanschetten 18,19 durch ihre Elastizität einen auch der Geräuschdämpfung dienenden Toleranzausgleich für eine in achsialer Richtung spielfreie Lagerung und Abdichtung der Lamellen 2 gegenüber dem Gehäusering 3 und dem Stützring 4.

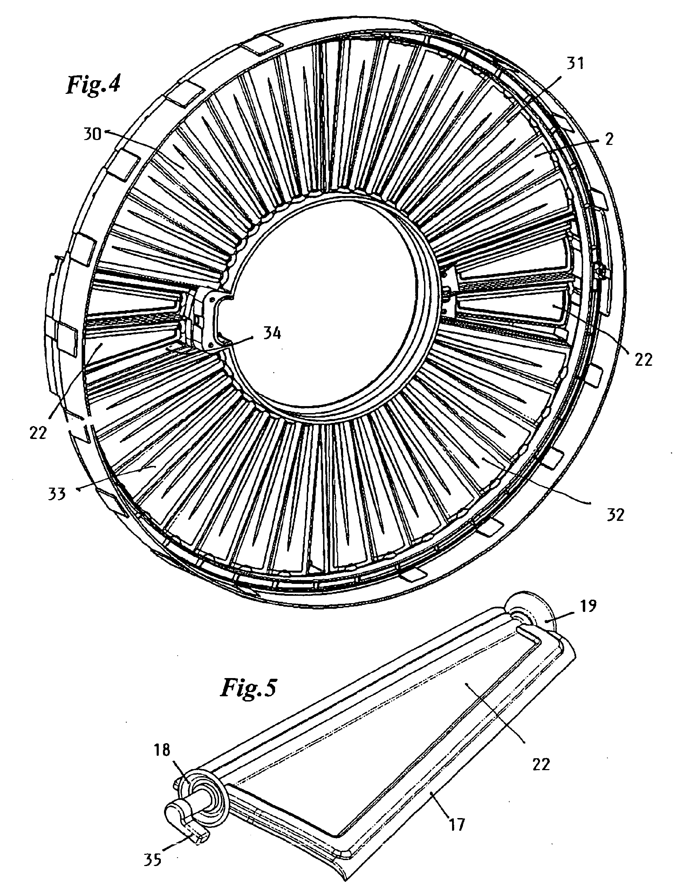

Die Herstellung eines Jalousierahmens bestehend u.a. aus äusserem Gehäusering 3 innerem Stützring 4 erfolgt vorzugsweise aus beispielsweise vier einzelnen 90°-Jalousiesektoren 30 bis 33 entsprechend der Darstellung in Fig.4, die nach Einsetzen der Lamellen 2,22 zu einer ringförmigen Gesamtjalousie über Kopplungselemente gekoppelt werden. Dabei ist für jeden Jalousiesektor 30 bis 33 eine frei schwenkbare Lamelle 22 vorgesehen, die aufgrund ihrer in Fig.5 dargestellten unsymmetrischen Form, bei Ausrichtung der Jalousie 1 in einer vorzugsweise vertikalen Ebene, durch Schwerkraft mit ihrem weichelastischen Rand 17 am benachbarten Begrenzungssteg 34 dichtend anliegt. Dabei ist die frei schwenkbare Lamelle 22 jeweils an einem Endbereich jedes der vier 90°-Jalousiesektoren angeordnet, so dass sich nach ihrer Verbindung miteinander zu einer ringförmigen Jalousie 1 entsprechend der Darstellung in Fig.4 jeweils zwei diametral und horizontal verlaufende Paare von frei schwenkbaren Lamellen 22 ergeben. Für die Begrenzung der Schwenkbarkeit dieser Lamellen 22 ist an deren Ende ein Anschlaghebel 35 angeformt.

## Patentansprüche

1. Jalousie für die Steuerung des Luftstromes durch den Motorkühler eines Fahrzeuges, mit ringförmig nebeneinander angeordneten, sich in Schliessposition teilweise überdeckenden, einerseits in einem äusseren, für die Verbindung mit dem Kühler bestimmten Gehäusering (3) und anderseits in einem inneren Stützring (4) schwenkbar gelagerten Lamellen (2), sowie mit einem Eingriffsmittel (11) für den Schwenkantrieb von Lamellen (2) aufweisenden, mit dem Gehäusering (3) gleich umlaufenden, in Umfangsrichtung verschiebbaren Stellring (13), **dadurch gekennzeichnet, dass** die Eingriffsmittel(11) des Stellringes (13) aus in Umlaufrichtung hintereinander angeordneten Zähnen bestehen, die sich in kämmendem Eingriff mit einem gezahnten, kreisbogenförmig verlaufenden Eingriffsbereich (12) eines Steuerkopfes (10) befinden, wobei der Stellring (13) mit dem Gehäusering (3) gegenseitig dichtend in Eingriff steht.

2. Jalousie nach Anspruch 1, **dadurch gekennzeichnet, dass** der Steuerkopf (10) zwischen zwei Querschnittsschenkeln (23,24) des Gehäuseringes (3) eingeschlossen ist.

3. Jalousie nach Anspruch 1 oder 2, **dadurch gekennzeichnet, dass** der dichtende Eingriff des Stellringes (13) mit dem Gehäusering (3) labyrinthartig durch den stegförmigen Eingriff eines Bereiches von Querschnittsschenkeln (23,24) in mindestens eine im Querschnitt u-förmige Aussparung (26, 26') gebildet ist.

4. Jalousie nach einem der Ansprüche 1 bis 3, **dadurch gekennzeichnet, dass** eine steuerkopfseitige Lamellenachse (16) in einer durch den Stellring (13) zur Seite der Lamellen (2) hin geschlossene Ausnehmung (20) des Gehäuseringes (3) gelagert ist.

5. Jalousie nach einem der Ansprüche 1 bis 4, **dadurch gekennzeichnet, dass** der Stellring (13) durch nach aussen in gleichmässigen Abständen an der Innenseite des Gehäuseringes (3) vorgesehene Rastnasen (42) in seiner axialen Position verdrehbar gehalten ist.

6. Jalousie nach einem der Ansprüche 1 bis 5, **dadurch gekennzeichnet, dass** der Stellring (13) einen u-förmigen Querschnitt hat und seine Querschnittsschenkel in gleichmässigen Abständen durch radial verlaufende Stege (43) miteinander verbunden sind.

7. Jalousie nach einem der Ansprüche 1 bis 6, **dadurch gekennzeichnet, dass** der äussere Gehäusering (3) in einem rohrstutzenförmigen Ansatz (9) einer Kühlerzarge (5) gehalten ist.

8. Jalousie nach einem der Ansprüche 1 bis 7, **dadurch gekennzeichnet, dass** an den Enden der Lamellen (2,22) jeweils eine ihren Lagerbereich abdeckende und an dem Gehäusering (3) und dem Stützring (4) mit einer Dichtlippe (28) dichtend anliegende Dichtmanschette (18,19) vorgesehen ist.

9. Jalousie nach Anspruch 8, **dadurch gekennzeichnet, dass** die Lamellen (2,22) entlang zumindest einer ihrer mit einer benachbarten Lamelle (2) in Schliesskontakt gelangenden Längskanten einen weichelastischen Lamellenrand (27) aufweisen, der im Bereich der Lamellenenden in einem Stück in die Dichtmanschette (18,19) übergeht.

10. Jalousie nach einem der Ansprüche 1 bis 9, **dadurch gekennzeichnet, dass** der Steuerkopf (10) einstückig an ein Achsstück (16) der Lamelle (2) angeformt ist.

11. Jalousie nach einem der Ansprüche 1 bis 10, **dadurch gekennzeichnet, dass** eine grössere Anzahl der Lamellen (2) durch mechanische Kopplung mit einem durch einen Signalgeber geregelten Stellantrieb zwischen einer maximal geöffneten und einer vollständig geschlossenen Position schwenkbar sind und eine kleinere Anzahl der Lamellen (22) unabhängig von solcher Kopplung durch ihr Eigengewicht oder Verbindung mit einem Fremdgewicht in Schliessposition gehalten sind.

12. Jalousie nach einem der Ansprüche 1 bis 11, **dadurch gekennzeichnet, dass** sie aus über ringförmig zusammengefügten Jalousiesektoren (30 - 33) besteht.

## Claims

1. Louvre for the control of airflow through the engine cooler of a vehicle, comprising fins (2) mounted side by side in ring-shaped arrangement, partly covering each other in closed position and tiltable on the one hand in a housing ring (3) provided for connection to the cooler and on the other hand in an internal supporting ring (4) and furthermore comprising an adjusting ring (13) with engagement means (11) for the swivel drive of said fins (2), which is slidable in circumferential direction along the housing ring (3), **characterized in that** the engagement means (11) of the adjusting ring (13) consist of sprockets arranged in series in circumferential direction, which mesh with a toothed arc-shaped engagement region (12) of a steering head (10), whereby the adjusting ring (13) and the housing ring (3) are in mutual sealing engagement.

2. Louvre according to claim 1, **characterized in that** the steering head (10) is enclosed between two cross-sectional shanks (23, 24) of the housing ring (3).

3. Louvre according to claims 1 or 2, **characterized in that** the sealing engagement of the adjusting ring (13) with the housing ring (3) is formed in a labyrinth-like manner by the web-shaped contact of a cross-sectional shank (23,24) in at least one U-shaped recess (26, 26') in the cross section.

4. Louvre according to one of claims 1 to 3, **characterized in that** a fin axe (16) at the steering head-end is mounted in a recess (20) of the housing ring (3) which is closed on the side of the fins (2) by the adjusting ring (13).

5. Louvre according to one of claims 1 to 4, **characterized in that** the adjusting ring (13) is held twistable in its axial position by latches (42) which are placed at regular intervals on the inside of the housing ring (3).

6. Louvre according to one of claims 1 to 5, **characterized in that** the adjusting ring (13) has a U-shaped cross-section and its cross-sectional shanks are interconnected at regular intervals by radial running webs (43).

7. Louvre according to one of claims 1 to 6, **characterized in that** the external housing ring (3) is held in a pipe-shaped extension (9) of a cooler frame (5).

8. Louvre according to one of claims 1 to 7, **characterized in that** at the ends of the fins (2,22) sealing collars (18, 19) are provided in each case which cover the bearing area and seal the housing ring (3) and the supporting ring (4) with a sealing lip (28).

9. Louvre according to claim 8, **characterized in that** the fins (2,22) exhibit a flexible fin edge (27) along at least one of its adjacent fins (2) which comes into contact with its longitudinal edge which merges into a piece of the sealing collar (18,19) in the fin end area.

10. Louvre according to one of claims 1 to 9, **characterized in that** the steering head (10) is formed in one piece with the axle piece (16) of the fin (2).

11. Louvre according to one of claims 1 to 10, **characterized in that** a majority of the fins (2) can move through mechanical coupling with a signal transmitter controlled by an actuator between a fully opened and completely closed position and a smaller number of the fins (22) are held in closed position, regardless of such coupling, by their own weight or through a connection with an external weight.

12. Louvre according to one of claims 1 to 11, **characterized in that** it consists of ring-shaped assembled louvre sectors (30 - 33).

## Revendications

1. Rideau déroulant pour la commande du flux d'air par le radiateur de moteur d'un véhicule automobile, comprenant des lamelles (2) qui sont agencées l'une à côté de l'autre en forme de couronne, qui se recouvrent en partie dans la position de fermeture et qui sont montées avec faculté de pivotement d'une part dans une couronne extérieure de carter (3) destinée à la liaison avec le radiateur et d'autre part dans une couronne de soutien intérieure (4), ainsi que comprenant une couronne de réglage (13) qui est déplaçable dans la direction circonférentielle, qui présente des moyens d'engagement (11) pour l'entraînement orientable des lamelles (2) et qui tourne dans la même direction que la couronne de carter (3), **caractérisé en ce que** les moyens d'engagement (11) de la couronne de réglage (13) sont constitués de dents agencées l'une derrière l'autre dans la direction circonférentielle, lesquelles se trouvent en engagement coiffant avec une zone d'engagement (12) dentée et en forme d'arc de cercle d'une tête de commande (10), dans lequel la couronne de réglage (13) se trouve en engagement avec la couronne de carter (3) sous une étanchéité réciproque.

2. Rideau déroulant selon la revendication 1, **caractérisé en ce que** la tête de commande (10) est enfermée entre deux montants en coupe transversale (23, 24) de la couronne de carter (3).

3. Rideau déroulant selon l'une ou l'autre des revendications 1 et 2, **caractérisé en ce que** l'engagement étanche de la couronne de réglage (13) avec la couronne de carter (3) est formé à la manière d'un labyrinthe par l'engagement en forme de nervure d'une zone des montants en coupe transversale (23, 24) dans au moins un évidement (26, 26') dont la section transversale est en forme de « U ».

4. Rideau déroulant selon l'une des revendications 1 à 3, **caractérisé en ce qu'**un axe de lamelle (16) du côté de la tête de commande est monté dans une cavité (20) de la couronne de carter (3), laquelle est fermée par la couronne de réglage (13) vers le côté des lamelles (2).

5. Rideau déroulant selon l'une des revendications 1 à 4, **caractérisé en ce que** la couronne de réglage (13) est maintenue avec faculté de rotation dans sa position axiale par des tenons d'enclenchement (42) prévus vers l'extérieur et à intervalles réguliers sur le côté intérieur de la couronne de carter (3).

6. Rideau déroulant selon l'une des revendications 1 à 5, **caractérisé en ce que** la couronne de réglage (13) a une section transversale en forme de « U » et **en ce que** ses montants en coupe transversale sont reliés les uns aux autres à intervalles réguliers par des nervures (43) qui s'étendent radialement.

7. Rideau déroulant selon l'une des revendications 1 à 6, **caractérisé en ce que** la couronne de carter extérieure (3) est maintenue dans un appendice (9) en forme de tubulure d'un châssis de radiateur (5).

8. Rideau déroulant selon l'une des revendications 1 à 7, **caractérisé en ce qu'**une manchette d'étanchéité (18, 19) est prévue sur les extrémités des lamelles (2, 22), laquelle recouvre respectivement sa zone de palier et laquelle vient en contact étanche sur la couronne de carter (3) et sur la couronne de soutien (4) avec une lèvre d'étanchéité (28).

9. Rideau déroulant selon la revendication 8, **caractérisé en ce que** les lamelles (2, 22) présentent un bord de lamelle souple et élastique (27) le long d'au moins une de leurs arêtes longitudinales qui viennent en contact de fermeture avec une lamelle adjacente (2), ledit bord de lamelle se transformant en un tronçon de la manchette d'étanchéité (18, 19) dans la zone des extrémités de lamelle.

10. Rideau déroulant selon l'une des revendications 1 à 9, **caractérisé en ce que** la tête de commande (10) est conformée un seul tenant sur un tronçon d'axe (16) de la lamelle (2).

11. Rideau déroulant selon l'une des revendications 1 à 10, **caractérisé en ce qu'**un nombre plus grand de lamelles (2) peut être pivoté par le couplage mécanique avec un mécanisme de commande régulé par un encodeur de signaux entre une position ouverte au maximum et une position fermée au complet et **en ce qu'**un nombre plus petit de lamelles (22) est maintenu dans la position de fermeture par son propre poids ou en liaison avec un poids externe, indépendamment d'un tel couplage.

12. Rideau déroulant selon l'une des revendications 1 à 11, **caractérisé en ce qu'**il est constitué de secteurs de rideaux déroulants (30 - 33) assemblés à la manière d'une couronne.
